# EUROPEAN PATENT APPLICATION

(11) **EP 4 198 895 A1**
(43) Date of publication of application: **21.06.2023**
(21) Application number: 21215777.0
(22) Date of filing: 17.12.2021
(51) Int. Cl.: G06T 7/246, G06T 7/33

(54) **PLANAR OBJECT TRACKING METHOD AND SYSTEM, COMPUTER PROGRAM, COMPUTER-READABLE STORAGE MEDIUM**

(71) Applicant: TOYOTA JIDOSHA KABUSHIKI KAISHA, Toyota-shi, Aichi-ken, 471-8571 (JP); Czech Technical University in Prague, 16627 Praha 6 (CZ)
(72) Inventor: CHUMERIN, Nikolay, 1140 BRUSSELS (BE); SERYCH, Jonas, 16627 PRAGUE 6 (CZ); MATAS, Jiri, 16627 PRAGUE 6 (CZ)
(74) Representative: Cabinet Beau de Loménie

(57) **Abstract**

A computer-implemented planar object tracking method for tracking a planar object between successive frames of a series of source images acquired at successive time steps over a time period, comprising:
dense feature extraction (S20) in a first frame of said frames and in a subsequent second frame of said frames;
estimation of corresponding positions (S30) between the first frame and the second frame based on corresponding features extracted in the first frame and in the second frame;
planar homography estimation (S40) between the first frame and the second frame based on the estimated corresponding positions between the first frame and the second frame.

## Description

### FIELD OF THE DISCLOSURE

The present disclosure is related to methods to track planar objects. Planar object tracking is a field of vision-based robotic applications that focuses on detection and tracking of planar objects, that are two-dimensional objects, or planar surfaces of objects in a three-dimensional space.

### BACKGROUND OF THE DISCLOSURE

Planar object tracking methods are commonly used in specific applications, and therefore specifically trained to detect a certain kind of planar object.

For instance, applications of planar object tracking include tracking of license plate (number plate) of vehicles, or tracking of road signs.

In this context, however, conventional planar object tracking methods may underperform when tracking unknown and unexpected planar objects.

Such planar object tracking methods are not desirable for applications such as autonomous driving of a vehicle, wherein unknown and unexpected objects on the road surface must be tracked to ensure safe driving of the vehicle.

The following references disclose various technologies related to planar object tracking.
[A] Anastasiia Mishchuk, Dmytro Mishkin, Filip Radenovic, and Jiri Matas. Working hard to know your neighbor's margins: Local descriptor learning loss. In Advances in Neural Information Processing Systems, pages 4826-4837, 2017.
[B] David G Lowe. Distinctive image features from scale-invariant keypoints. International journal of computer vision, 60(2):91-110, 2004.
[C] Daniel DeTone, Tomasz Malisiewicz, and Andrew Rabinovich. Deep image homography estimation. arXiv preprint arXiv: 1606.03798, 2016.
[D] Martin A Fischler and Robert C Bolles. Random sample consensus: a paradigm for model fitting with applications to image analysis and automated cartography. Communications of the ACM, 24(6):381-395, 1981.
[E] Maksym Ivashechkin, Daniel Barath, and Jiri Matas. Us-acv20: robust essential, fundamental and homography ma-trix estimation. In Proceedings of the 25st Computer VisionWinter Workshop Conference, 2020.
[F] Lowe, D.G. Distinctive Image Features from Scale-Invariant Keypoints. International Journal of Computer Vision 60, 91-110 (2004). https://doi.org/10.1023/B:VISI.0000029664.99615.94
[G] Bay H., Tuytelaars T., Van Gool L. (2006) SURF: Speeded Up Robust Features. In: Leonardis A., Bischof H., Pinz A. (eds) Computer Vision - ECCV 2006. ECCV 2006. Lecture Notes in Computer Science, vol 3951. Springer, Berlin, Heidelberg. https://doi.org/10.1007/11744023 32
[H] Ma, Z., Wang, L., Zhang, H., Lu, W., & Yin, J. (2020, August). RPT: Learning point set representation for Siamese visual tracking. In European Conference on Computer Vision (pp. 653-665). Springer, Cham.
[I] R. Richa, R. Sznitman, R. Taylor and G. Hager, "Visual tracking using the sum of conditional variance," 2011 IEEE/RSJ International Conference on Intelligent Robots and Systems, 2011, pp. 2953-2958, doi: 10.1109/IROS.2011.6094650.
[J] Liang, Pengpeng & Ji, Haoxuanye & Wu, Yifan & Chai, Yumei & Wang, Liming & Liao, Chunyuan & Ling, Haibin. (2021). Planar Object Tracking Benchmark in the Wild. Neurocomputing. 454. 10.1016/j.neucom.2021.05.030.
[K] Lin Chen, Haibin Ling, Yu Shen, Fan Zhou, Ping Wang, Xiang Tian, and Yaowu Chen "Robust visual tracking for planar objects using gradient orientation pyramid," Journal of Electronic Imaging 28(1), 013007 (18 January 2019). https://doi.org/10.1117/1.JEI.28.1.013007

### SUMMARY OF THE DISCLOSURE

In view of the above problem, the main purpose of the present disclosure is to propose a planar object tracking method which efficiently tracks unknown planar objects in the real world.

A main application of the present disclosure is for use in an autonomous driving vehicle. However, the present disclosure can more broadly be applied to tracking of planar object in any application involving tracking of expected planar objects and/or unexpected planar objects.

An aspect of the invention relates to a computer-implemented planar object tracking method for tracking a planar object between successive frames of a series of source images acquired at successive time steps over a time period, comprising: dense feature extraction in a first frame of said frames and in a subsequent second frame of said frames; estimation of corresponding positions between the first frame and the second frame based on corresponding features extracted in the first frame and in the second frame; planar homography estimation between the first frame and the second frame based on the estimated corresponding positions between the first frame and the second frame.

A location of the planar object in the second frame may then be determined, for instance based on the corresponding positions utilized to estimate the planar homography, or based on the estimated planar homography and an estimation of a location of the tracked planar object in the first frame.

By "planar object" is understood an object having an external surface which is planar or substantially planar.

By "frame" is understood an acquisition result of an image acquisition system at a given time. Commonly, an image acquisition system captures frames at a predetermined frequency measured in frames per second (fps).

By "feature" is understood a point of interest in a frame, associated with a position in the frame.

By "feature extraction" (in a frame) is understood the identification of the pixels or regions of the frame exhibiting a predetermined characterizing feature (among possibly a set of a plurality of characterizing features). This feature may for example be that the color of the pixel has a certain value or is within a certain range, it can be the presence of a pattern such as an edge, etc...

Feature extraction further includes the calculation, for each identified pixel, of the value of a descriptor. Such a descriptor is a datum which characterizes the identified pixel relative to the feature for which the pixel has been identified. This datum is preferably chosen to be robust relative to variations that may modify the image (e.g. high/low luminosity, etc.). Known descriptors are for example SIFT (reference [F.]), SURF (reference [G.], etc. Features of a region of the frame may be associated with a pixel representative of the region, for example the center pixel of the region.

In a dense feature extraction method, every pixel of a frame is evaluated to determine if it exhibits the or one of the predetermined feature(s). In other words, in this case a feature may be identified for each pixel of the frame.

By "dense feature extraction" is understood feature extraction in a grid pattern on a frame. For example, "dense feature extraction" could be feature extraction in every single element of a frame, in other words in every pixel of a frame.

Dense feature extraction can also be understood as opposed to sparse feature extraction.

The method is designed for tracking planar objects in real time. Therefore, the chronology of the frames is based on time chronology (that is, each frame is time-stamped). For this reason, "successive" means "chronologically successive", "subsequent" means "chronologically subsequent", "previous" means "chronologically previous", "earlier/earliest" means "chronologically earlier/earliest", "prior to" means "chronologically prior to".

However, it is understood that the present method may also be applied for tracking planar objects not in real-time or even chronologically backwards by simply inverting the order of frames.

In such a method, the combined use of dense feature extraction, estimation of corresponding positions and estimation planar homography makes it possible to efficiently track unexpected planar objects. In particular, the present method was evaluated on commonly used benchmarks, POT-210 and POIC, achieving high accuracy and robustness.

The step of planar homography estimation between the first frame and the second frame can either be performed directly, by applying an homography estimation method between these two frames, or indirectly, by calculating an homography between one of these frames and an auxiliary (or intermediate) frame, or even between two auxiliary frames, and then estimating the planar homography between the first frame and the second frame based on the calculated homography calculated in this manner. In other words, the homography between the first frame and the second frame can be estimated directly between these two frames, or indirectly by combining homographies involving intermediate frames.

The method according to the present invention may further comprise generating an image mask of the first frame by image segmentation, wherein corresponding positions which are used to estimate the planar homography are selected based on the image mask.

In the method according to the present invention, the first frame may be the earliest frame of the series of source images where a planar object to track is detected.

Tracking can thus be started from the first instance when a planar object is detected. In the context of autonomous driving of a vehicle, this ensures that enough time is left to adapt trajectory taking into account of the position of the planar object.

In the method according to the present invention, dense feature extraction, estimation of corresponding positions and planar homography may be repeatedly performed with the second frame being successive frames subsequent to the first frame.

Preferably, dense feature extraction, estimation of corresponding positions and planar homography may be repeatedly performed with the second frame being directly successive frames subsequent to the first frame.

In other words, the first frame serves as reference frame for tracking the planar object in subsequent frames.

In the method according to the present invention, dense feature extraction may be performed using a CNN model. In particular, dense feature extraction may be performed using HardNet CNN model.

A Convolutional Neural Network (CNN) is known in the art as a class of artificial neural network.

HardNet CNN model is an example of CNN model that can be used for dense feature extraction. See for example reference [A].

Other methods can be used for dense feature extraction, including but not limited to SIFT descriptor (reference [B]) or SuperPoint (reference [C]).

In the method according to the present invention , estimating the corresponding positions may include:
for each position in the first frame, determining a forward pair comprising said position and a forward corresponding position, the forward corresponding position being the position in the second frame having the lowest feature descriptor distance with respect to the considered position of the first frame; and/or
for each position in the second frame, determining a backward pair comprising said position and a backward corresponding position, the backward corresponding position being the position in the first frame having the lowest feature descriptor distance with respect to the considered position of the second frame; wherein
corresponding positions are defined as a forward pair, a backward pair, or a forward pair matching with a backward pair.

By descriptor distance between two positions is understood the calculation of a mathematical distance between the descriptor of the two positions. Several mathematical distances are known by the skilled person, for example based on the Euclidian distance (2-norm distance) or the 1-norm distance, which are applicable to scalars, vectors and matrices.

This method makes it possible to efficiently identify corresponding positions between both frames, while reducing the occurrence of false positives.

As explained above, several corresponding position estimation methods may be used. For example, corresponding positions may be estimated as the forward pairs only, or may be estimated as the backward pairs only.

In the case of using forward pairs, the corresponding position in the second frame of a given position in the first frame may be defined as first best forward corresponding position in the second frame if a ratio is equal to or higher than a threshold, wherein the ratio is the ratio of descriptor distance between the first best corresponding position in the second frame and the given position of the first frame to the descriptor distance between the second best corresponding position in the second frame and the given position of the first frame.

In the case of using backward pairs, the corresponding position in the first frame of a given position may be defined similarly, by inverting "forward" and "backward" and inverting "first frame" and "second frame".

In the method according to the present invention, planar homography estimation may be based on robust planar homography.

By "robust" is here understood a method that is little sensitive to error, such as outliers. For example, a robust planar homography method can usually provide acceptable output with up to 90% of the data being outliers.

The planar homography may also involve direct homography methods.

In the method according to the present invention, the planar homography estimation may be based on a RANSAC method.

RANSAC (RANdom SAmple Consensus) methods are a family of iterative and robust methods involving for estimating parameters from a set of data containing outliers. Several variations of RANSAC methods exist, see for example [D] and [E].

The planar homography may also be estimated based on other methods, for example least median of squares.

The method according to the present invention may comprise, prior to dense feature extraction, estimation of corresponding positions and planar homography estimation: identification of a planar object bounding box for the planar object in a destination frame based on a region where the planar object is expected to be in the first frame; and wherein the planar homography between the first frame and the second frame is estimated based on a planar homography estimated between the first frame and an intermediate frame, said intermediate frame being obtained by cropping said destination frame based on the identified planar object bounding box.

By "planar object bounding box" is understood a box in the frame where the planar object to detect is expected to be present. The planar object bounding box may be estimated based on the movement of the planar object, tracked between previous frames. The "box" may include a rectangle and/or any kind of geometrical shape.

Such cropping makes it possible to reduce the size of data, decreasing memory load and computing load.

The planar object bounding box can be defined more accurately, so as to efficiently crop the frame.

In some embodiments, the method according to the present invention comprises, prior to dense feature extraction, estimation of corresponding positions and planar homography estimation: Generation of an intermediate frame by warping the second frame; estimation of a planar homography between the first frame and the intermediate frame; and wherein the planar homography between the first frame and the second frame is estimated by combining the planar homography estimated between the first frame and the intermediate frame and an inverse of the warping transformation applied to the second frame.

In the case of the above described embodiments, the destination frame is normally chosen as a frame more similar to the first frame than the second frame, so that estimating the homography between the first frame and the destination frame be more accurate or simpler than estimating the homography between the first frame and the second frame.

For instance, in order to obtain the intermediate frame, warping the second frame may include (or may consist of) applying to the second frame an inverse of a homography estimated between the first frame and a third frame, the third frame being before the second frame. In this case, the third frame can preferably be the frame directly preceding the second frame.

By "warping" is here understood reversible distortion of the image. In particular, when warping is based on planar homography, the distortion involves a combination of scale, rotation, translation and perspective distortion of the frame.

By warping the second frame using planar homography estimated for a previous frame, the planar object to track can be oriented in the intermediate frame such that the plane of the planar object is close to the plane of the camera, which differ in further rotation of the planar object between the first frame and the intermediate frame. This facilitates dense feature extraction, estimation of corresponding positions and planar homography estimation between the first frame and the intermediate frame.

The method according to the present invention may comprise the estimation of an occlusion map for the second frame based on the estimated planar homography and features of the second frame and of the first frame.

The estimation of occlusion map makes it possible to identify the position of the planar object despite a part of the planar object not being visible.

The present invention also includes a computer program comprising instructions which, when the program is executed by a computer, cause the computer to carry out the steps of the method of the present invention.

The method according to the present invention also includes a computer-readable storage medium comprising instructions which, when executed by a computer, cause the computer to carry out the steps of the method of the present invention.

The present invention also includes a planar object tracking system for tracking a planar object between successive frames of a series of source images acquired at successive time steps over a time period, the planar object tracking system comprising one or more processors and a computer-readable medium; the computer-readable medium comprising computer instructions stored therein, wherein the instructions, when executed by the one or more processors, cause the one or more processors to carry out the steps of the planar object tracking method of the present invention.

The present invention also includes a vehicle or a robot comprising a planar object tracking system according to the present invention.

It is intended that combinations of the above-described elements and those within the specification may be made, except where otherwise contradictory.

It is to be understood that both the foregoing general description and the following detailed description are exemplary and explanatory only and are not restrictive of the disclosure, as claimed.

The accompanying drawings, which are incorporated in and constitute a part of this specification, illustrate embodiments of the disclosure and together with the description, and serve to explain the principles thereof.

### BRIEF DESCRIPTION OF THE DRAWINGS

Fig. 1 is a schematic view showing a vehicle comprising a control system and a remote server used to train the control system, in accordance with the present disclosure.
Fig. 2 is a general diagram of the planar object tracking method according to the method of the invention.
Fig. 3 is a diagram of the pre-processing step the method of the invention.
Fig. 4 is a diagram of the correspondence estimation step the method of the invention.
Fig. 5 is a diagram of the post-processing step the method of the invention.
Figs. 6A, 6B and 6C are schematic diagrams of frames at different stages of the planar object tracking method of the invention.
Figs. 7 and 8 are graphs illustrating performance indicators of the method of the invention as compared with other planar object tracking methods of the art.

### DESCRIPTION OF THE EMBODIMENTS

Reference will now be made in detail to a planar object tracking method constituting an exemplary embodiment of the present disclosure.

A planar object tracking method will be described between a first frame and a second frame of a series of source images acquired at successive time steps over a time period, wherein the second frame is a frame subsequent to the first frame.

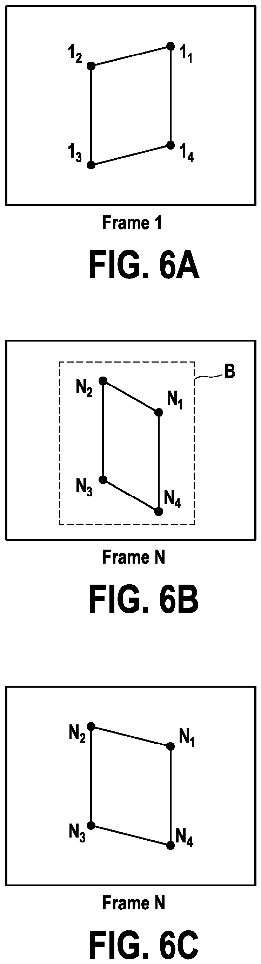

The planar object tracking method will be described with reference to Figs. 6A, 6B and 6C, which present a schematic view of a planar object to track. For the sake of simplicity, the planar object to track of Figs. 6A, 6B and 6C is a quadrilateral defined by its four vertices.

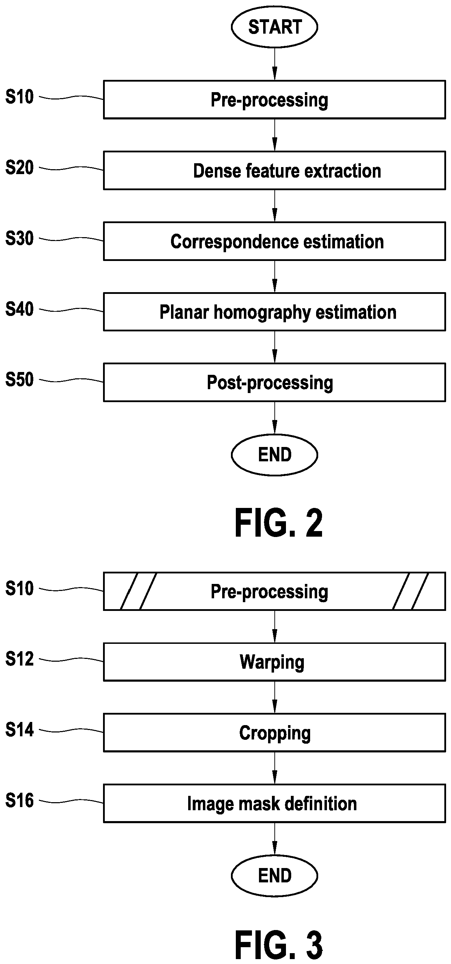

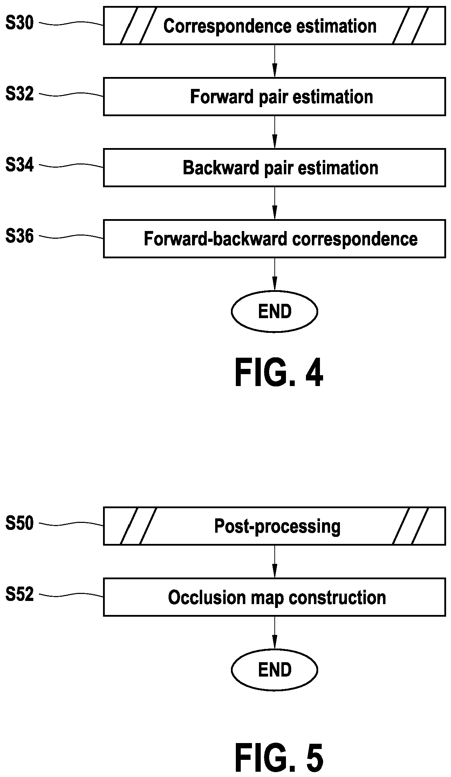

The planar object tracking method which may be implemented in some embodiments of the method will also be described with reference to Fig. 2, which presents main steps of the method, and Figs. 3 to 5, which respectively present substeps of steps S10, S30 and S50.

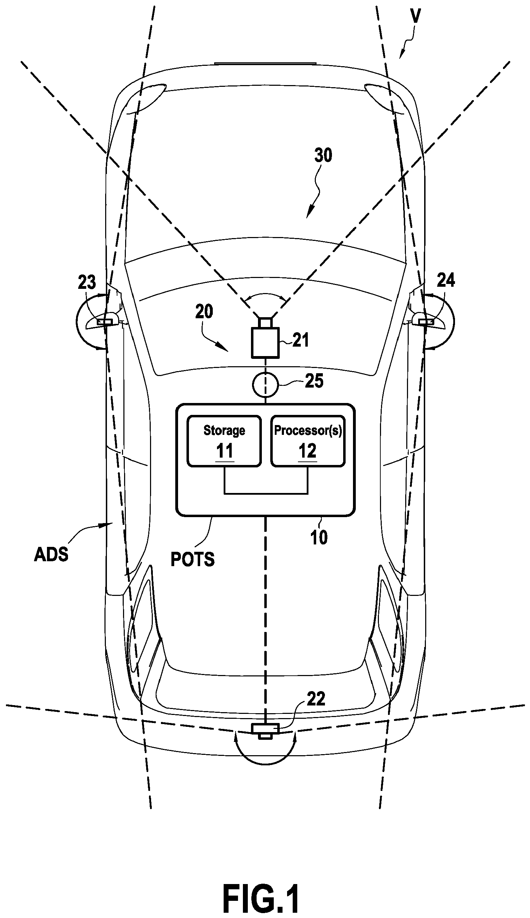

The method planar object tracking method has been developed in order to control a controlled device which is, in the embodiments, an autonomous vehicle, such as the vehicle V moving on a road shown on Fig.1.

The vehicle V comprises a planar object tracking system POTS, which is part of an autonomous driving system ADS.

The planar object tracking system POTS is implemented on a central driving computer 10 ("computer 10'). Computer 10 comprises a non-transitory storage medium 11 and one or more processor(s) 12. The one or more processors 12 are intended to be representative of the presence of any one or more processors or processing devices, of any of a variety of forms. In addition, although computer 10 is represented on Fig.1 in a single box, it may be a distributed calculation system, comprising a plurality of processors, possibly physically arranged on different locations.

Most of the components and functional units of the autonomous driving system ADS are on-board vehicle V; however, part of them can be remote components, and can be for instance part of a remote server.

The vehicle V is a car with an autonomous driving system, which represents a non-limiting example of a vehicle or a robot. The autonomous driving system ADS of vehicle V is configured to drive vehicle V in fully autonomous mode based mainly on the predictions outputted by the planar object tracking system POTS.

The ADS system further comprises a set of sensors 20, each sensor being connected to computer 10, a set of actuators 30 (not shown), and other components. The set of sensors 20 comprises in particular sensors configured to perceive an external environment of the vehicle V, which include a front camera 21, a rear camera 22, two lateral cameras 23 and 24, and a roofmounted lidar 25. The cameras are configured to cover a 360° angle around vehicle V.

The set of sensors 20 also comprises a set of sensors to monitor the state of the car, such as an inertial measurement unit, a rotation speed sensor for measuring the speed of rotation of the front wheels, etc.

In the present method, the first frame is for example the earliest frame of the series of source images where a planar object to track is detected. The first frame may also be any frame of the series of source images where the planar object to track is detected. For example, tracking may be ignored if the detected size of the planar object is smaller than a predetermined threshold, which would correspond to the detected planar object being either distant and/or of small dimensions.

The method involves the main steps S20 of dense feature extraction, S30 of correspondence estimation and S40 of planar homography estimation.

### S20: dense feature extraction

Dense feature extraction involves densely extracting features in the first frame and in the second frame and computing an associated descriptor. For example, features may be extracted for every position in the first frame and in the second frame.

Beforehand, a set of descriptors which appear relevant to identify the planar object to be tracked is defined.

For instance, if the planar object has a specific color, descriptor(s) based on color will be selected. If the planar object has specific patterns on it, for instance stripes, corresponding descriptors can be chosen, etc.

Then, for each chosen descriptor, in some embodiments, a value of the descriptor is computed for each position in the frame.

The calculation of the descriptor values is performed for the first frame and the second frame.

In the present embodiment, for example, a descriptor may include pixel value, which is a single value in the case of grayscale images, or a vector of three values in the case of RGB images.

For the sake of simplicity, a single descriptor will be considered hereafter, the descriptor being defined as a single numeric value.

However, it is understood that other descriptors can be used, based on color, texture and statistical estimates thereof, and may be a vector or higher-dimension matrix.

Dense feature extraction may be achieved for example by inputting the frame into a Convolutional Neural Network (CNN) configured to calculate the descriptor for each position of the frame.

### S30: Correspondence estimation

Based on descriptors computed for each position of the frames, corresponding positions can be estimated between the first frame and the second frame. Fig. 6A and Fig. 6B are views of the planar object respectively at frame 1 corresponding to the first frame and frame N corresponding to the second frame. The vertices of the planar object are named as Xₖ, wherein X is the frame number in the series of source images and k is a unique number identifying a given vertex.

Correspondence estimation may include steps S32, S34 and S36.

In some embodiments, the corresponding positions are estimated only for part of the features extracted at step S20. For instance, the corresponding positions may be estimated only for the features extracted at step S20 which are based on pixels located in a specific part of the first frame and/or the second frame. This specific part of the first and/or second frame can be an image mask, for instance the image mask calculated in a step S16, described below.

### S32: Forward pair estimation

A forward pair of corresponding positions is defined between the first frame and the second frame, and in particular as a corresponding position in the second frame to a given position in the first frame.

A cost-volume matrix is defined as a matrix in which each matrix element comprises a descriptor distance between extracted features of a position in the first frame and extracted features of a position in the second frame. (If several descriptors are used, the matrix element will be a vector of the descriptor distances for the respective descriptors).

For instance, the cost-volume-matrix may be defined for each position in the first frame and each position in the second frame. In such a case, the cost-volume matrix is a 4D cost-volume matrix of Ht x Wt x Ho x Wo dimensions, wherein Ht is the height of the first frame, Wt is the width of the first frame, Ho is the height of the second frame and Wo is the width of the second frame, in pixels.

For each position in the first frame, the closest position in the second frame is defined as the position having the smallest descriptor distance to said position in the first frame.

The closest position can be found by extracting the maximum value over the last two dimensions of the cost-volume matrix, thereby defining a forward pair for each position in the first frame.

In other words, the forward corresponding position of a position in the first frame is the position in the second frame having the lowest feature descriptor distance with respect to the considered position of the first frame.

In the example of Figs. 6A, 6B, the following forward pairs can be identified:
the estimation of the closest position to vertex 1₁ of frame 1 in frame N yields vertex N₁, whereby (1₁-N₁) constitutes a forward pair;
the estimation of the closest position to vertex 1₂ of frame 1 in frame N yields vertex N₂, whereby (1₂-N₂) constitutes a forward pair;
the estimation of the closest position to vertex 1₃ of frame 1 in frame N yields vertex N₃, whereby (1₃-N₃) constitutes a forward pair; and
the estimation of the closest position to vertex 14 of frame 1 in frame N yields vertex N₄, whereby (1₄-N₄) constitutes a forward pair.

### S34: Backward pair estimation

Similarly to Forward pair estimation of step S32, a backward pair of corresponding positions is defined between the first frame and the second frame, and in particular as a corresponding position in the first frame to a given position in the second frame.

In particular, the cost-volume matrix is a 4D cost-volume matrix of Ho x Wo x Ht x Wt dimensions, wherein Ho is the height of the second frame and Wo is the width of the second frame, Ht is the height of the first frame, Wt is the width of the first frame, in pixels.

For each position in the second frame, the closest position in the first frame is defined as the position having the smallest descriptor distance to said position in the first frame.

The closest position can be found by extracting the maximum value over the first two dimensions of the cost-volume matrix, thereby defining a backward pair for each position in the second frame.

In other words, the backward corresponding position of a position in the second frame is the position in the second frame having the lowest feature descriptor distance with respect to the considered position of the second frame.

In the example of Figs. 6A, 6B, the following backward pairs can be identified:
the estimation of the closest position to vertex N₁ of frame N in frame 1 yields vertex 1₁, whereby (1₁-N₁) constitutes a backward pair;
the estimation of the closest position to vertex N₂ of frame N in frame 1 yields vertex 1₂, whereby (1₂-N₂) constitutes a backward pair;
the estimation of the closest position to vertex N₃ of frame N in frame 1 yields vertex 1₃, whereby (1₃-N₃) constitutes a backward pair; and
the estimation of the closest position to vertex N₄ of frame N in frame 1 yields vertex 1₄, whereby (1₄-N₄) constitutes a backward pair.

### S36: Forward-backward correspondence

A forward-backward corresponding pair is defined as a matching forward pair and backward pair.

In other words, a forward-backward pair is defined as a first position of the first frame and a second position of the second frame, wherein the closest position to said first position in the second frame is said second position, and wherein the closest position to said second position in the first frame is said first position.

Such forward-backward corresponding pairs are therefore expected to be pairs of corresponding positions that more accurately correspond to the same position of a captured planar object, and may be used as tentative pairs for planar homography estimation.

In the examples of Figs. 6A and 6B, each of the previously identified forward pairs (1₁-N₁), (1₂-N₂), (1₃-N₃), (1₄-N₄) corresponds to one of the previously identified backward pairs (1₁-N₁), (1₂-N₂), (1₃-N₃), (1₄-N₄).

Therefore, each of these pairs (1₁-N₁), (1₂-N₂), (1₃-N₃), (1₄-N₄) is identified as a forward-backward pair. Each of these pairs constitutes a tentative pair which defines corresponding positions which will be used to estimate the planar homography at step S40.

Instead of being based on forward-backward corresponding pairs, the corresponding positions may also be defined based on forward pairs, or on backward pairs.

### S40: Planar homography estimation

The tentative pairs (defining corresponding positions) identified at step S30 are then used at step S40 in planar homography estimation methods to evaluate a planar homography for a planar object.

While implementing the planar homography estimation method, tentative pairs which correspond to the object to track can be differentiated from other tentative pairs, which do not correspond to points of the object but to points of the background (hereinafter 'background points'). Indeed, a planar object to track is expected to have a different movement in space than background points, such that the homography estimated for tentative pairs of the planar object to track would be different from the homography estimated for tentative pairs of background points.

Consequently, by implementing this planar homography estimation method, it is possible to robustly and accurately identify the planar homography for a tracked object, since the tentative pairs which do not correspond to the object can be disregarded.

In addition, it is further possible to single out and identify the planar object to track, both in the first frame and the second frame: The location of the planar object in the first and second frame can indeed be estimated based on the tentative pairs (or corresponding positions) which correspond to the object to track.

As an alternative, the tentative pairs corresponding to the object to track can also be differentiated from other tentative pairs corresponding to background points based on a previously determined image mask. For instance, in the image mask, an object labelled as foreground and/or with a predetermined label can be identified as an object to track. Labelling can be reapplied to the object in the second frame based on positions of tentative pairs.

In particular, planar homography estimation may be done based on robust planar homography methods.

For example, planar homography estimation may be done using RANSAC methods.

RANSAC methods are methods for estimating model parameters. For example, RANSAC methods involve randomly selecting a small sample subset to fit to the model, calculating the model parameters best fitting this sample subset, estimating whether elements outside the sample subset are inliers or outliers, and repeating until a satisfactory number of elements are considered are inliers.

The method of steps S20, S30 and S40 makes it possible to estimate planar homography for a planar object between a first frame and a second frame.

In particular, the method involving combined use of dense feature extraction, correspondence estimation and planar homography estimation performs consistently well between several images, involving image artefacts or modifications including but not limited to rotation, blur, or occlusion.

In order to achieve tracking of the planar object throughout frames, the second frame may be repeatedly updated to be the last captured frame by a camera. That is, the planar object tracking method may be repeatedly performed for the frame 1 (first frame) and the frame N (second frame) with N taking incremental values from 2 to M, where M is the total number of frames of the series of source images such that frame M is the last frame of the series of source images.

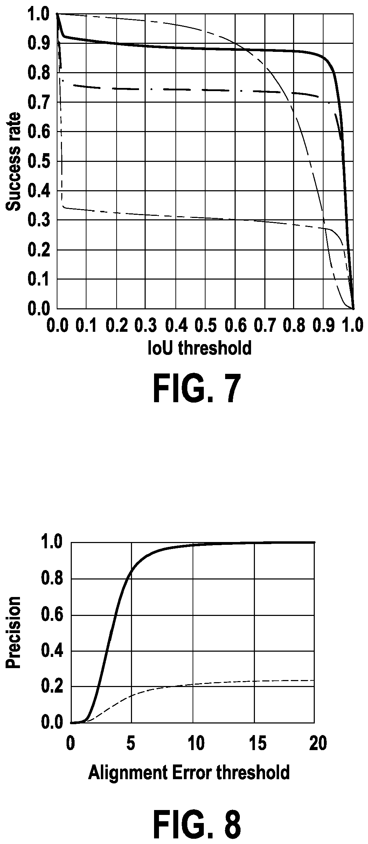

Fig. 7 is an example of success rate of planar object tracking over IoU threshold for several planar object tracking methods for the POT - 210 database (reference [J]).

The planar object tracking method of the invention is displayed in solid line, the dash-dash-dot line corresponds to a common method using SIFT (reference [F]), the long dash-short dash line corresponds to a common method using RPT method (reference [H]), and the short dash-short dash-long dash line corresponds to a common method using SCV (reference [I]).

In image recognition, the IoU (Intersection over Union) the IoU is the ratio of the Intersection over the Union, wherein the Intersection is the size of the intersection of the real area corresponding to the object and of the area corresponding to the object as detected by the detection method, and the Union is the size of the union of the real area corresponding to the object and of the area corresponding to the object as detected by the detection method.

The IoU is a quantity between 0 (worst recognition of the object) and 1 (best recognition of the object) usually expressed in percent and indicative of the accuracy of image recognition and tracking.

All the methods have a success rate of 1 when the IoU threshold is set to 0, that is when no requirement is set for the quality of tracking, and the success decreases as the requirements for quality of tracking increase, and reach a success rate of 0 when the IoU threshold is set to 0, that is when perfect tracking is achieved.

The present method strictly outperforms methods using SIFT and using SCV for every IoU threshold.

While the method using RPT has the performance for low IoU thresholds, that is with very poor tracking requirements, the present method has a success rate that is consistently above 0.85 up to a IoU threshold of 0.9, while the success rate of all the other methods fall.

In other words, the present method therefore shows better tracking performance and accuracy than common methods of the art.

An optional step S10 of pre-processing of the second frame may be done prior to step S20. An optional step S50 of post-processing may also be done further to step S40.

### S10: Pre-processing

Pre-processing involves at least one of steps S12 and S14 below.

### S12: Warping

In order to estimate the homography between the first frame and the second frame more accurately and/or quickly, this homography may be estimated based on an intermediate frame, calculated at step S12. This intermediate frame can be calculated by many different manners.

In the present embodiment, the intermediate frame is a pre-warped frame, calculated based on the homography estimated for a third frame ("destination frame"), which is a frame preceding the second frame and subsequent to the first frame. The third frame may be the frame directly preceding the second frame. The third frame may also be intermediate frame of step S14 below.

In most cases, the successive frames are acquired at successive time points, with very little time between two such successive time points.

For this reason, the planar homography between the first frame and the second frame is generally very close to the homography between the first frame and the third frame. Consequently, the intermediate image obtained by applying to the second frame the inverse of the homography between the first frame and the third frame will be very similar to the first frame.

Therefore, by warping the second frame based on the homography estimated between the first frame and the third frame (that is, by applying the inverse of this homography to the second frame) an intermediate frame is obtained in which the residual warping of the planar object compared with the first frame is quite limited, being only caused by a minor movement of the planar object between the first frame and said intermediate frame.

At step S12, after having calculated the intermediate frame, the homography between the first frame and the intermediate frame is calculated.

Then, the planar homography between the first frame and the second frame is calculated by combining the calculated homography between the first frame and the intermediate frame and the homography between the intermediate frame and the second frame (the latter homography being equal to the homography between the first frame and the third frame).

Fig. 6C illustrates the second frame that has been warped using the homography estimated for a third frame corresponding to frame N-1, with N≥3.

Due to the timespan between the third frame (frame N-1) and the second frame (frame N) being shorter than the timespan between the first frame (frame 1) and the second frame (frame N), the residual warping of the planar object in the second frame (frame N) corresponding to movement between the third frame (frame N-1) and the second frame (frame N) is expected to be rather small, such that warping the second frame (frame N) makes it possible to achieve an orientation of the planar object that is closer to that of the plane of the camera, thereby facilitating the operations of steps S20, S30 and S40.

Fig. 8 is a graph illustrating the precision of planar object tracking with respect to the alignment error threshold for the present method where warping of S12 is enabled (solid line) and disabled (doted line), tested for a test sample of the POT-210 database (reference [J]) including planar objects showing high rotation. With warping, the present method shows a dramatic improvement in precision for an identical alignment error threshold as compared to the method without warping.

### S14: Cropping

In order to estimate the homography between the first frame and the second frame more accurately and/or quickly, this homography may be estimated based on an intermediate frame, calculated at step S14. This intermediate frame can be calculated by many different manners.

In the present embodiment, the intermediate frame is a cropped frame, cropped based on the position of the planar object in a third frame ("destination frame") preceding the second frame. In particular, the third frame may be the frame directly preceding the second frame. The third frame may also be the first frame. The third frame may also be the intermediate frame of step S12.

With the position of the planar object estimated in the third frame, a planar object bounding box may defined for the planar object in the second frame based on a region where the object is detected in the third frame.

The planar object bounding box is estimated to include positions where the planar object is expected to be present.

The planar object bounding box may be obtained by dilating or expanding a bounding box defined for the third frame, representing a region where the planar object is expected to be in the third frame.

For example, the bounding box may be estimated based on detected position of the planar object, for example an overhead traffic sign will remain over a certain position in height while a road defect will remain under a certain position in height. The bounding box may also be estimated based on identified speed and movement of the planar object in preceding frames.

The second frame is thus replaced with the cropped second frame or intermediate frame in further processes.

Cropping can also be applied to the first frame.

This makes it possible to reduce the size of the second frame, thereby reducing memory costs, as well as reducing the amount of data in steps S20, S30 and S40, thereby improving computing efficiency.

If the process described above for step S12 has been performed, the intermediate frame may be cropped based on the position of the planar object in a third frame preceding the intermediate frame. In particular, the third frame may be the first frame. In this case, the planar object bounding box for the intermediate frame may be calculated in the same fashion as the planar object bounding box for the second frame is calculated above based on the position of the planar object in the third frame. For instance, the planar object bounding box for the intermediate frame may be obtained by dilating or expanding a bounding box identified for the first frame.

A planar object bounding box B is illustrated in Fig. 6B.

### S16: Image mask definition

An optional step of image mask identification or definition can be done on the frames of the series of source images.

Various methods are known, with which object masks outlining objects present in images can be identified. For instance using image segmentation methods, a type of an object present in an image, its bounding box, and/or the pixels representing the object, can be identified. Image segmentation may for example output a background/foreground segmentation. Common background/foreground segmentation methods may be used, for example gradient-based segmentation methods.

An image mask can then be generated on the frames of the series of source images. The image mask is a mapping of an image wherein each position is associated with the corresponding result of image segmentation. The planar object bounding box for an object, as mentioned for step S14, may be determined based on the image mask.

Image segmentation may also involve semantic segmentation, that is to say the association of regions of a frame with a label. For example, relevant labels in the application of autonomous driving may include but not be limited to: road, pothole, car, tree, sidewalk, road sign and traffic cone.

An object to track can thus be identified as including regions having a label among predetermined labels and/or having a similar background/foreground label. For example in the listing above, regions having a label such as for instance 'road sign' could be considered as regions containing an object to track.

Image segmentation can be done automatically, or can be done semi-automatically, that is to say after initialization of labelling and/or definition of a background/foreground position by a user.

This initialization can for example be done using a human-machine interface, for example a display device playing the captured videos and having a touchscreen.

Alternately, the image mask can be identified or defined only for the first frame of the series of source images.

This makes it possible to identify regions of interest of the frame, for example corresponding to the object to track.

The image mask defined in the first frame of the series of source images can also be defined in following frames by propagation of the image mask from the first frame of the series of source images to successive frames of the series of source images. In other words, the image masks of successive frames can be defined step by step based on the image mask of the first frame.

This can be done step by step based on corresponding positions of step S30, wherein corresponding positions in a first frame and in a second frame are associated with the same properties of image mask, as defined above.

The image mask can used to reduce the number of positions for search of pairs as in steps S32, S34 and/or S36, for example by limiting the search to positions associated with predetermined labels.

The image mask can also be used to define the planar object image bounding box B. For example, the image mask can be used to define a region where the planar object is present based on label associated with the planar object, so as to derive a region where the planar object is expected to be, using movement of the object between frames, for example.

### S50: post-processing

Further to the estimation of planar homography, post-processing can be applied to the second frame.

For example, post-processing may involve displaying the second frame with a superimposed layout of the planar object, or Optical Character Recognition of the detected planar object.

Post-processing may also involve the estimation of an occlusion map.

### S52: Estimation of an occlusion map

In the case where a part of the planar object is not visible due to an obstacle being present between the camera and the planar object, the steps S20, S30 and S40 may still be achieved properly based on the visible portion of the planar object.

An occlusion map can then be estimated, corresponding to a map of positions of the planar object, including positions that are not visible.

The occlusion map can be estimated for the second frame based on the estimated planar homography for the second frame and on the features of the first frame and the second frame.

This occlusion map may then be superimposed to the estimated position of the planar object on the captured image, to efficiently track the planar object despite partial obstruction.

In the case of autonomous driving, this makes it possible to take into account of a danger that has been partially obstructed, for example by another vehicle.

Throughout the description, including the claims, the term "comprising a" should be understood as being synonymous with "comprising at least one" unless otherwise stated.

For the same of simplicity, the embodiments have been described in the case where the first frame and the second frame are rectangular frames have the same number of pixels. However, it is understood that the method is also available for different shapes and sizes of frames. For example, such modification of size and shape can be caused by warping and cropping.

Although the present disclosure has herein has been described with a certain order of steps, it is understood that another order can be defined. In particular, substeps S12, S14 and S16 can be achieved in any order, and substeps S32 and S34 can be achieved in any order.

For example, substep S12 can be performed and substep S14 can be not performed, such that substep S12 is performed as defined above.

For example, substep S14 can be performed and substep S12 can be not performed, such that substep S12 is performed as defined above.

Substeps S12 and S14 can also be performed in that order, wherein that the third frame used for cropping of substep S14 is the intermediate frame of step S12.

Substeps S14 and S12 can also be performed in that order, wherein that the third frame used for warping of substep S12 is the intermediate frame of step S14.

Although the present disclosure has been described with a quadrilateral planar object, it is understood that different shapes can be defined, and more than four positions can be identified in the object.

Although the present disclosure has been described with a single planar object to track, it is understood that several planar objects can be tracked simultaneously.

For example, several instances of the present method can be run in parallel.

Although the present disclosure herein has been described with reference to particular embodiments, it is to be understood that these embodiments are merely illustrative of the principles and applications of the present disclosure.

It is intended that the specification and examples be considered as exemplary only, with a true scope of the disclosure being indicated by the following claims.

## Claims

1. A computer-implemented planar object tracking method for tracking a planar object between successive frames of a series of source images acquired at successive time steps over a time period, comprising:
dense feature extraction (S20) in a first frame of said frames and in a subsequent second frame of said frames;
estimation of corresponding positions (S30) between the first frame and
the second frame based on corresponding features extracted in the first frame and in the second frame;
planar homography estimation (S40) between the first frame and the second frame based on the estimated corresponding positions between the first frame and the second frame.

2. A computer-implemented planar object tracking method of claim 1, further comprising generating an image mask of the first frame by image segmentation, and wherein
corresponding positions which are used to estimate the planar homography are selected based on the image mask.

3. A computer-implemented planar object tracking method of claim 1 or 2, wherein
the first frame is the earliest frame of the series of source images where a planar object to track is detected.

4. A computer-implemented planar object tracking method of any of claims 1 to 3, wherein
dense feature extraction (S20), estimation of corresponding positions (S30) and planar homography estimation (S40) are repeatedly performed with the second frame being successive frames subsequent to the first frame.

5. A computer-implemented planar object tracking method of any of claims 1 to 4, wherein estimating the corresponding positions includes:
for each position in the first frame, determining a forward pair comprising said position and a forward corresponding position (S32), the forward corresponding position being the position in the second frame having the lowest feature descriptor distance with respect to the considered position of the first frame; and/or
for each position in the second frame, determining a backward pair comprising said position and a backward corresponding position (S34),
the backward corresponding position being the position in the first frame having the lowest feature descriptor distance with respect to the considered position of the second frame; wherein
corresponding positions are defined as a forward pair, a backward pair,
or a forward pair matching with a backward pair (S36).

6. A computer-implemented planar object tracking method of any one of claim 1 to 5, wherein planar homography estimation (S40) is based on a RANSAC method.

7. A computer-implemented planar object tracking method of any of claims 1 to 6, comprising, prior to dense feature extraction (S20), estimation of corresponding positions (S30) and planar homography estimation (S40):
identification of a planar object bounding box for the planar object in a destination frame based on a region where the planar object is expected to be in the first frame; and wherein
the planar homography between the first frame and the second frame is estimated based on a planar homography estimated between the first frame and an intermediate frame, said intermediate frame being obtained by cropping (S14) said destination frame based on the identified planar object bounding box.

8. A computer-implemented planar object tracking method of any of claims 1 to 7, comprising, prior to dense feature extraction (S20), estimation of corresponding positions (S30) and planar homography estimation (S40):
generation of an intermediate frame by warping the second frame;
estimation of a planar homography between the first frame and the intermediate frame; and wherein
the planar homography between the first frame and the second frame is estimated by combining the planar homography estimated between the first frame and the intermediate frame, and an inverse of the warping transformation applied to the second frame.

9. A computer-implemented planar object tracking method according to claim 8, wherein warping the second frame includes applying to the second frame an inverse of a homography estimated between the first frame and a third frame, the third frame being before the second frame.

10. A computer-implemented planar object tracking method according to any
one of claim 1 to 9, comprising the estimation of an occlusion map (S52) for the second frame based on the estimated planar homography and features of the second frame and of the first frame.

11. A computer program comprising instructions which, when the program is
executed by a computer, cause the computer to carry out the steps of the planar object tracking method of any one of claims 1 to 10.

12. A computer-readable storage medium comprising instructions which,
when executed by a computer, cause the computer to carry out the steps of the planar object tracking method of any one of claims 1 to 10.

13. A planar object tracking system for tracking a planar object between successive frames of a series of source images acquired at successive time steps over a time period, the planar object tracking system comprising one or more processors (12) and a computer-readable medium (11);
the computer-readable medium (11) comprising computer instructions stored therein, wherein the instructions, when executed by the one or more processors, cause the one or more processors to carry out the steps of the planar object tracking method of any one of claims 1 to 10.

14. A vehicle or a robot comprising a planar object tracking system according to claim 13.
